# EUROPEAN PATENT APPLICATION

(11) **EP 4 488 174 A1**
(43) Date of publication of application: **08.01.2025**
(21) Application number: 23184143.8
(22) Date of filing: 07.07.2023
(51) Int. Cl.: B64D 11/02

(54) **AIRCRAFT WITH A GRAY WATER DRAINAGE SYSTEM AND METHOD**

(71) Applicant: Airbus Operations GmbH, 21129 Hamburg (DE)
(72) Inventor: Canton, Thomas, 21129 Hamburg (DE); Zybala, André, 21129 Hamburg (DE); Albers, Frederik, 21129 Hamburg (DE)

(57) **Abstract**

The invention relates to an aircraft (1), with a vacuum toilet system comprising a waste tank (2) and a vacuum generator (3) for building up a negative pressure and for suction into the waste tank (2), and with a gray water drainage system. The gray water drainage system comprises a gray water line (9) between at least one consumer equipment of a monument (5, 6, 7, 8) and the waste tank (2).

## Description

The present invention relates to an aircraft according to the preamble of claim 1, and a method of using a gray water drainage system.

Conventional passenger aircrafts have a vacuum toilet system and a gray water drainage system. The conventional vacuum toilet system includes the waste tank and the vacuum generator to create a negative pressure or vacuum in the waste tank and to suck the waste water from at least one toilet through a waste water line of the vacuum toilet system. The suction process is usually triggered manually by pressing a flush button in the aircraft toilet, so that the waste water can be sucked out effectively and quickly by the negative pressure inside the waste tank.

Gray water drainage systems are used for drainage the so-called gray water to the outside of the aircraft by means of a drain mast. Gray water arises in consumer equipments such as washbasins. Compared to the waste water from the vacuum toilet system, the gray water does not contain contaminations that are harmful to health. The gray water is fed through a sloped gray water line to at least one drain mast to the outside of the aircraft. Such solely gravitational force based gray water drainage system comprises basically two sloped (inclined) gray water lines. A first sloped gray water line is provided in the froward fuselage to a drain mast in front of a wing box of the aircraft. A second sloped gray water line extends from an area behind the wing box to a drain mast in the aft fuselage.

A disadvantage of this gray water drainage system is that in low attitudes or on ground the gray water only drains along the sloped gray water line due to the gravitational force, so that only a low pressure is built up in the gray water line due to the low gravitational force, thus increasing the risk of clogging of the gray water line.

Another disadvantage of this gray water drainage system is that multiple drain masts are required to drain the gray water from the forward fuselage area and the aft fuselage area. As the drain masts are positioned outside the fuselage, every additional drain mast generates parasitic drag.

Another disadvantage of this gray water drainage system is that a complex electrically heating is required in order to avoid icing for the drain masts and the gray water during ducting.

Therefore, the object of the present invention is to provide an aircraft having a gray water drainage system which allows reliable drainage of gray water and prevents clogging or icing of the gray water drainage system.

The object is achieved by an aircraft with the features of claim 1.

The invention relates to an aircraft with a vacuum toilet system comprising a waste tank and a vacuum generator for establishing a negative pressure and for suction into the waste tank, and with a gray water drainage system. In this regard, the gray water drainage system comprises a gray water line between at least one consumer equipment of a monument and the waste tank.

The aircraft may be any aircraft, such as a passenger aircraft or a cargo aircraft, equipped with a conventional kerosene-fueled aircraft engine or a novel electric aircraft engine. The gray water drainage system of the aircraft is configured to drain gray water from at least one consumer equipment of the monument, such as a washbasin in a monument or a sink in a galley. One advantage of the gray water drainage system is that the gray water line is connected to the existing waste tank of the vacuum toilet system, so that the gray water can be effectively and even in low attitudes or on ground fast drained due to the negative pressure inside the waste tank.

Preferably, gray water is collected upstream a valve in the drainage system, wherein in low attitudes or on ground a signal is generated to activate the vacuum generator as soon as a specific amount of gray water has been accumulated there.

By means of this, clogging of the gray water is prevented. Preferably, the gray water line and/or the vacuum toilet system line is a rigid line made of plastic or metall. However, flexible hoses are also applicable. In order to avoid any collapsing, flexible hoses may have a larger wall thickness than rigid lines.

As the gray water line does not have to be inclined anymore, it can be orientated horizontally relative to a fuselage of the aircraft and/or to the ground while the aircraft is on the ground. By means of this, installation of the gray water line is facilitated.

In addition, as the gray water line is not inclined, the wing box is no barrier any more. As a result, a single gray water line be routed from the forward fuselage to the aft fuselage in order to drain gray water from multiple consumer equipments throughout the entire fuselage of the aircraft.

As the gray water line can have a smaller inner diameter compared to conventional gray water lines of cavity force driven gray water drainage systems, the gray water line can be installated next to an existing vacuum toilet system line, for example, within a triangular module close below a cabin floor in a warm area. Preferably, the gray water line run parallel to the vacuum toilet system line, so that both lines can be installed easily.

Advantageously, the gray water drainage system may further comprise a branch line extending between a switching valve and a drain mast. The switching valve may be positioned in the gray water line and may be provided to feed the gray water either to the waste tank or to the drain mast. The switching valve can be pneumatic, hydraulic or operated by an electric actuator. The switching valve in the first mode diverts the gray water to the waste tank and in the second mode to the drain mast to an outside area of the aircraft. As a result, the negative pressure of the waste tank is used to drain off the gray water from the at least one consumer equipment through the gray water line. However, after reaching the switching valve, the gray water is diverted in the direction of the branch line to the drain mast. Ideally, the branch line can be perpendicular to the orientation of the aircraft fuselage or to the ground so that the gray water can flow off as quickly as possible merely due to the gravitational force.

Advantageously, a sensor can be designed such that the sensor can detect whether the drain mast is clogged or iced up, wherein if the sensor detects that the drain mast is clogged or iced up, the switching valve can be activated automatically so that the gray water can be diverted into the waste tank. The sensor can be any sensor, such as an optical sensor or a pressure sensor, which is suitable to detect the blockage or icing on the drain mast. The drain mast may ice up especially during flight operation at low outdoor temperatures. A blockage can be caused, for example, by particles in the gray water, such as food scraps or hair. If the sensor detects a blockage or icing, the switching valve is switched to the second mode, so that the gray water is diverted to the waste tank. This ensures safe operation of the gray water drainage system even in the event of blockage or icing, thus preventing possible flooding and water damage in the monuments.

Advantageously, a cargo drainage system is provided which is in fluid connection with the gray water drainage system. The cargo drainage system is adapted to drain water collected in a bilge of a cargo compartment to the outside of the aircraft. In particular, the cargo water in the bilge may be formed by condensation or by melted snow that may enter the cargo compartment during loading the baggage. For instance, a cargo drainage line can extend between a bilge of a cargo compartment of the aircraft and the gray water line. The cargo drainage line extending to the gray water line may, for example, runs perpendicular to the gray water line. Consequently, the negative pressure generated by the vacuum generator in low attitudes or on ground in the waste tank is also applied at the end of the cargo drainage line and generates a suction function, whereby both the water from the bilge and warm air and/or condensate are drained. On cruise flight level, natural vacuum from the pressure difference between the cabin and outside ambient is used.

Advantageously, a switching valve may be configured to close and open the cargo drainage line to the bilge, wherein the cargo drainage line to the bilge may be opened automatically, for instance at regular time intervals, or by hand. A timing device can be used to control the drainage of the bilge at regular intervals, whereby a control device is used to automatically open the switching valve at regular intervals for a set duration. For example, the bilge and/or cargo compartment may be drained several times an hour such as every 15 minutes during flight time and after the aircraft has been unloaded on the ground. The bilge drain process can also be triggered by the actuation of the input means, such as a button in the cockpit of the aircraft, for example by the pilot. Draining the bilge consequently pumps the collected water to the drain mast reducing the overall weight of the aircraft and thus saving fuel.

Advantageously, means may be provided for feeding warm air into the bilge. By means of this, icing of the cargo water is prevented. The warm air is also sucked into the gray water ductwork and escapes from the aircraft via the drain mast. By means of this, icing of the elements passing by is also avoided, thus the need for electrical ice protection equipment is reduced. An (continuously or discrete) interval for releasing the warm into the gray water ductwork can be adjusted in such a way that even the drain mast does not need any electrical ice protection equipment.

Preferable, heat generated by electric bays are used. In an electrical bay, there are usually control devices and other electrical equipment that generate warm air through waste heat. In an electric aircraft, this waste heat is even larger than in a conventional kerosene-powered aircraft. The means for feeding the warm air may include, for example, a fan or air conditioner so that the warm air from the electric bay can be more effectively sucked through the branching line to the drain mast. An advantage of this embodiment is that a flushing noise does not has any negative impact on the passenger's convenience as it arises in the bildge. Further on, the continuously escape of cabin pressure through the drain mast creates a pressure sink at the inflow point, which promotes the flow of the heated air from the ebays through the entire bildge and avoids any water that collects here (condensate, cargo drain etc.) from freezing so that it can be drained overboard via the described invention.

The aircraft may also have multiple electrical bays, for example, in the forward fuselage and the center behind the wing box fuselage. Simultaneously, the electrical bay is cooled by the heat transfer to the bilge, thus enabling a simplified cooling system for the electric bay.

Another object of the invention is a method of using the gray water drainage system described above. This object is solved by a method with the features of claim 11.

According to the invention, during flight operation of the aircraft, the switching valve is switched to a first mode automatically or manually by a user, wherein the gray water is drained to the drain mast by the negative pressure caused by the difference of the pressure in the cabin and the ambient or atmospheric pressure, wherein if the aircraft is on the ground, the switching valve is switched to a second mode automatically or manually by a user in which the gray water is drained to the waste tank.

During flight operation, at least on cruise flight level, the difference between the cabin pressure and the atmospheric pressure causes more gray water to be drained to the drain mast due to the difference between the cabin pressure and the atmospheric pressure in addition to the negative pressure from the waste tank. If the aircraft is in low attitudes or on the ground the switching valve is switched to the second mode, so that the gray water is sucked into the waste tank and does not get outside through the drain mast. This prevents the pollution of the parking space at the airport under the aircraft.

Advantageously, a sensor can be configured such that the sensor can detect whether the drain mast is clogged or iced up, wherein if the sensor detects that the drain mast is clogged or iced up, the switching valve is automatically activated and switched from the first mode to the second mode so that the gray water is diverted to the waste tank. Thus, a possible blockage or icing of the drain mast is detected by means of the sensor and the switching valve is switched to the second mode so that the gray water is diverted into the waste tank.

Advantageously, water is drained from the bilge of the aircraft and/or from at least one cargo compartment of the aircraft into the gray water line, wherein a switching valve in the cargo drainage line is configured to close and open the fluid connection between the bilge and the gray water line. The branching cargo drainage line to the bilge and/or cargo compartment can be opened automatically, for instance at regular time intervals, or manually. As a result, by opening the switching valve collected cargo water in the bilge, and/or a condensate drain. This effectively drains the collected water in the bilge and diverts it to the outside through the drain mast to reduce overall aircraft weight and thereby save fuel. The drained warm air from the electric bay is also sucked out through the drain mast, preventing possible icing of the drain mast.

If the drain mast is clogged or iced up, warm air in the bilge can be fed to the drain mast in order to open the drain mast and/or push the ice away. This can be initiated by a signal of the drain mast sensor or in predetermined time intervals.

In addition or alternatively, a pressure change can be applied to the drain mast in order to keep it open. The pressure change comprises a sequence of different pressure shocks and can be initiated by a signal of the drain mast sensor or in predetermined time intervals. Advantageous embodiments are disclosed in the dependent claims, the description and the figures.

In what follows, preferred embodiments of the present invention are explained with respect to the accompanying drawings. As is to be understood, the various elements and components are depicted as examples only, may be facultative and/or combined in a manner different than that depicted. Reference signs for related elements are used comprehensively and not necessarily defined again for each figure. Shown is schematically in
Fig. 1 a schematic representation of an inventive aircraft with a vacuum toilet system, a gray water drainage system and cargo drainage systems;
Fig. 2 a schematic representation of an inventive system architecture;
Fig. 3 a schematic representation of a triangular module of the aircraft.

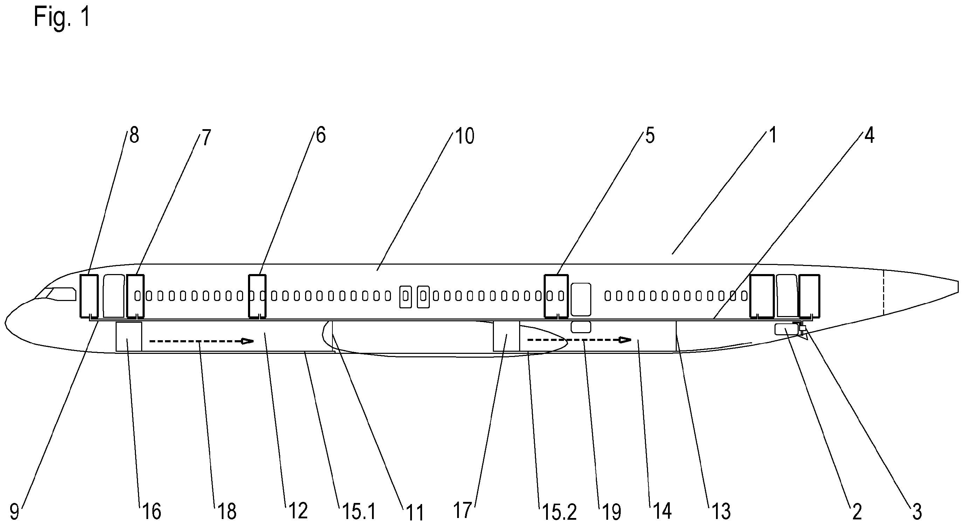

Fig.1 shows a schematic representation of an aircraft 1 having several monuments 5, 6, 7, 8. For the sake of clarity, only a few of them are referenced by reference signs. The monuments 5 to 8 are positioned over the entire fuselage (cabin) and are lavatories and galleys, for instance, with toilets, washbasin, sinks, etc. as consumer equipments. The aircraft 1 further shows a vacuum toilet system and a gray water drainage system.

The vacuum toilet system has a waste tank 2, a vacuum generator 3 for building up a negative pressure in the waste tank 2 and a waste line 4 extending between the waste tank 2 and toilets in the respective monuments 5 to 8.

The gray water drainage system is adapted to drain gray water, arising in washbasin and sinks, for instance, out of the aircraft. It comprises a gray water line 9 which extends between the waste tank 2 and at least one consumer equipment of a monument 5 to 8, and.

The gray water line 9 thereby is routed horizontally relative to the fuselage 10 of the aircraft 1 and/or to the ground while the aircraft is on the ground. The gray water line 9 also runs parallel to the line 4 of the vacuum toilet system.

Further on, the aircraft 1 comprises two cargo drainage systems. Each cargo drainage system is adapted to drain water collected in a bilge 15.1, 15.2 of a cargo compartment 12, 14 out of the aircraft 1. Each cargo drainage system has a cargo drainage line 11, 13 which extends between a bottom of the respective bilge 15.1, 15.2 and the gray water line 9.

In order to avoid icing of the cargo water in the bilges 15.1, 15.2, warm air is blown into the bilges 15.1, 15.2, as illustrated by the arrows 18, 19. The warm air is extracted from electric bays 16, 17 which are positioned in front of each cargo compartment. The suction process of the water collected in the bilge 15.1, 15.2 as well as the warm air from the two electric bays 16, 17 can be performed automatically controlled by a control device at regular time intervals, or manually triggered by an input means. The collected water as well as the warm air is fed through the two cargo drainage lines 11, 13 to the gray water line 9 and sucked out of the waste tank 2 by the applied negative pressure.

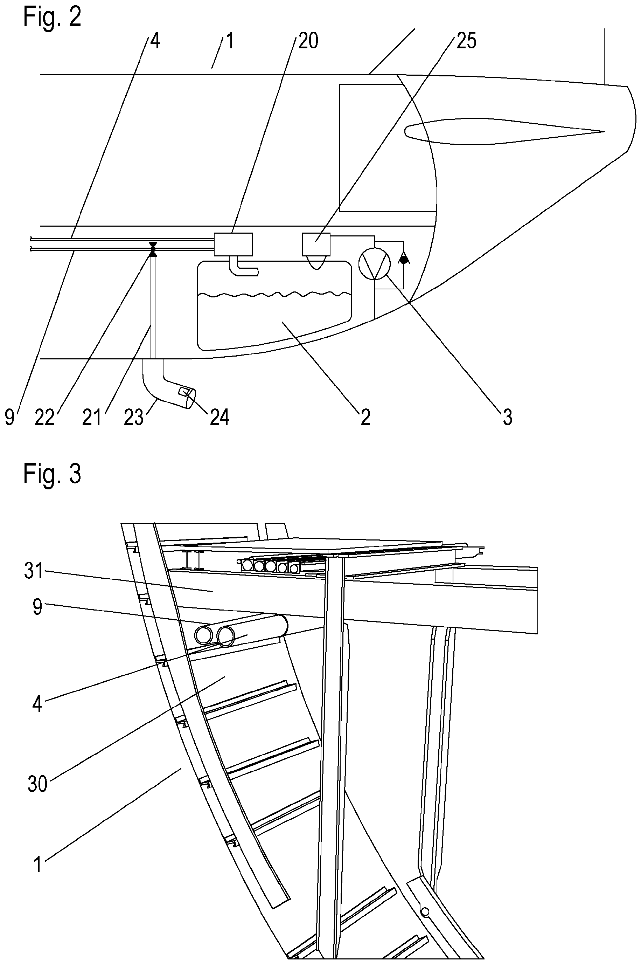

Fig. 2 shows a schematic representation of a system architecture in the aft fuselage of the aircraft 1. Shown is the vacuum toilet system comprising the waste line 4, the waste tank 2 and the vacuum generator 3, which generates the negative pressure in the waste tank 2 in low attitudes and on ground. In order to avoid that particles are suct out of the waste tank 2 during evacuation, a filter element 25 is provided between the vacuum generator 3 and its waste tank inlet.

Also shown in Figure 2 is the gray water line 9 running parallel to the waste line 4, wherein the waste line 4 and the gray water line 9 are connected to the waste tank 2 via a common connection 20.

The gray water drainage system further comprises a branch line 21 positioned between a switching valve 22 and a drain mast 23, the switching valve 22 diverting gray water to the waste tank 2 in a first mode and diverting gray water to the drain mast 23 in a second mode.

A sensor 24 is arranged at the drain mast 23, which can detect whether the drain mast 23 is clogged or iced up, wherein if the sensor 24 detects that the drain mast 23 is clogged or iced up, the switching valve 22 is automatically triggered and switched to the first mode so that the gray water is diverted into the waste tank 2.

Fig. 3 shows a schematic diagram of a triangular module 30 of the aircraft 1 close below cross beams 31 of the cabin floor.

The gray water line 9 runs parallel to the waste line 4 within the triangular module 30. As illustrated, the gray water line 9 has an inner diameter which is smaller than the inner diameter of the waste line 4.

The invention relates to an aircraft (1), with a vacuum toilet system comprising a waste tank (2) and a vacuum generator (3) for building up a negative pressure and for suction into the waste tank (2), and with a gray water drainage system. The gray water drainage system comprises a gray water line (9) between at least one consumer equipment of a monument (5, 6, 7, 8) and the waste tank (2).

## Claims

1. Aircraft (1) with a vacuum toilet system comprising a waste tank (2) and a vacuum generator (3) for building up a negative pressure for suction in the waste tank (2) and with a gray water drainage system, **characterized in that** the gray water drainage system comprises a gray water line (9) between at least one consumer equipment of a monument (5, 6, 7, 8) and the waste tank (2).

2. Aircraft (1) according to claim 1, wherein the gray water line (9) extends basically horizontally relative to a fuselage (10) of the aircraft (1) and/or to the ground while the aircraft (1) is on the ground.

3. Aircraft (1) according to claims 1 or 2, wherein the gray water line (9) extends basically from the forward fuselage to the aft fuselage.

4. Aircraft (1) according to claims 1, 2 or 3, wherein the gray water line (9) is integrated in a triangular module (30) of the aircraft (1) along the fuselage (10).

5. Aircraft (1) according to any of the preceding claims, wherein the gray water drainage system further comprises a branch line (21) extending between a switching valve (22) and a drain mast (23), wherein the switching valve (22) is arranged in the gray water line (9) and is intended to divert the gray water either to the waste tank (2) or to the drain mast (23).

6. Aircraft (1) according to any of the preceding claims, wherein a sensor (24) is configured such that the sensor (24) can detect whether the drain mast (23) is clogged or iced, wherein if the sensor (24) detects that the drain mast (23) is clogged or iced, the switching valve (22) can be automatically activated so that the gray water can be diverted into the waste tank (2).

7. Aircraft (1) according to any of the preceding claims, wherein a cargo drainage system is provided having a cargo drainage line (11, 13) which extends between a bilge (15.1, 15.2) of a cargo compartment (12, 14) and the gray water line (9).

8. Aircraft (1) according to claim 7, wherein a switching valve is configured to establish and/or shut down the fluid connection between the cargo drainage line (11, 13) and the bilge (15.1, 15.2), wherein the fluid connection can be established automatically or manually.

9. Aircraft (1) according to claims 7 or 8, wherein means are provided for feeding warm air into the bilge (15.1, 15.2).

10. Aircraft (1) according to claim 9, wherein the means are adapted to feed the warm air generated by the electric bay (16, 17) into the bilge (15.1, 15.2).

11. Method of using the gray water drainage system in the aircraft (1) according to any one of claims 1-10, wherein during flight operation of the aircraft (1) the switching valve (22) is switched to a first mode automatically or manually by a user, in which the gray water is drained to the drain mast (23) by the negative pressure caused by the difference of the pressure in the cabin and the ambient or atmospheric pressure, wherein if the aircraft (1) is in low attitudes or on the ground the switching valve (22) is switched to a second mode automatically or manually by a user in which the gray water is drained to the waste tank (2).

12. Method according to claim 11, wherein a sensor (24) is configured such that the sensor (24) can detect whether the drain mast (23) is clogged or iced up, wherein if the sensor (24) detects that the drain mast (23) is clogged or iced up, the switching valve (22) is automatically activated and switched from the first mode to the second mode such that the gray water is diverted into the waste tank (2).

13. Method according to claim 11 or 12, wherein water is drained from the bilge (15.1,15.2) of the aircraft (1) and/or from at least one cargo compartment (12, 14) of the aircraft (1) into the gray water line (9), wherein a switching valve in the cargo drainage line (11, 13) is configured to close and open a fluid connection between the bilge (15.1,15.2) and the gray water line (9), wherein the branching cargo drainage line (11, 13) to the bilge (15.1,15.2) is opened automatically or manually.

14. Method according to claim 13, wherein warm air in the bilge (15.1, 15.2) is fed to the drain mast (23) based on a signal of the sensor (24) that the drain mast (23) is clogged or iced up or based on a time interval.

15. Method according to claim 12 or 14, wherein a pressure change is applied to the drain mast (23) based on a signal of the sensor (24) that the drain mast (23) is clogged or iced up or based on a time interval.
